# EUROPEAN PATENT SPECIFICATION

(11) **EP 0 514 118 B1**
(45) Date of publication and mention of the grant of the patent: **21.08.1996**
(21) Application number: 92304244.4
(22) Date of filing: 12.05.1992
(51) Int. Cl.: G21C 3/07, C22C 38/40

(54) **Austenitic stainless steel with extra low nitrogen and boron content to mitigate irradiation-assisted stress corrosion cracking**
Austenitischer rostfreier Stahl mit extrem niedrigen Stickstoff- und Borgehalten zur Erniedrigung der durch Strahlung verursachten Spannungsrisskorrosion
Acier austénitique inoxydable à teneurs extrêmement basses en azote et en bore pour mitiger la corrosion fissurante sous contrainte, causée par irradiation

(30) Priority: 25.02.1992 US 841119; 14.05.1991 US 699825
(43) Date of publication of application: 19.11.1992
(73) Proprietor: GENERAL ELECTRIC COMPANY, Schenectady, NY 12345 (US)
(72) Inventor: Jacobs, Alvin Joseph, San Jose, California 95129 (US); Gordon, Gerald Myron, Soquel, California 95073 (US)
(74) Representative: Pratt, Richard Wilson

(56) References cited:
- EP-A- 0 288 245
- FR-A- 1 413 549
- FR-A- 2 388 374
- FR-A- 2 414 077
- FR-A- 2 483 467
- GB-A- 905 238
- GB-A- 2 200 925
- US-A- 3 301 668

## Description

### Background of the Invention

The present invention relates to austenitic stainless steel compositions for service in environments of irradiation such as in the interior of a nuclear fission reactor.

Stainless steel alloys, especially those of high chromium-nickel type, commonly are used for components employed in nuclear fission reactors due to their well-known good resistance to corrosion and other aggressive conditions. For instance, nuclear fuel, neutron absorbing control units, and neutron source holders frequently are clad or contained within a sheath or housing of stainless steel of Type 304 or similar alloy compositions (using the official classification system of the American Society of Testing and Materials). Many such components, including those mentioned, are located in or about the core of fissionable fuel of a nuclear reactor where the aggressive conditions, such as high radiation and temperature, are the most rigorous and debilitating.

Such components present in the core of light water reactors occasionally fail by irradiation-assisted stress corrosion cracking (IASCC), a special form of intergranular stress corrosion cracking (IGSCC). Solution or mill annealed stainless steels generally have been considered to be essentially immune to IGSCC, but have been found to degrade and fail due to IGSCC following exposure to high irradiation. Such irradiation related intergranular stress and corrosion cracking failures have occurred notwithstanding the stainless steel metal having been in the so-called solution or mill annealed condition, namely, having been treated by heating up to within a range of typically about 1010°C (1850°F) to about 1121°C (2050°F), then rapidly cooled as means of solutionizing carbides and inhibiting their nucleation and precipitation out into grain boundaries. Apparently, inside the core, the high irradiation field plays some complex role in assisting IGSCC to take place. One of the possible ways in which irradiation might assist the metal failure is by promoting the segregation of impurities to grain boundaries.

Up until now, it has been widely believed that one or more of three impurities--silicon, phosphorous, and sulfur--segregate to the grain boundaries during irradiation and, by some mechanism at which can only be speculated, render the grain boundaries more susceptible to cracking than the surrounding matrix material. The obvious remedy against cracking has been to restrict the content of these impurities.

Nitrogen is another element that is known to segregate in stainless steel, and recommendations have been made to restrict its content also (U.S. Pat. No. 4,836,976). U.S. Pat. No. 4,863,682, on the other hand, proposes specific proportions of niobium and tantalum keyed to the proportion of carbon in stainless steel alloy compositions. Various heat treatments of the stainless steel alloy composition have been proposed in U.S. Pats. Nos. 4,699,671 and 4,878,962.

Nitrogen differs from the aforementioned impurities in one important respect. Nitrogen has a large thermal neutron cross-section and can undergo an (n,p) reaction after it is segregated. Since the proton (hydrogen atom) so-produced is a known cause of grain boundary cracking, it becomes even more imperative to prevent or minimize the amount of nitrogen segregation. Calculations show that as much as 100 ppm of hydrogen per year can accumulate in the grain boundary as a result of nitrogen segregation and the (n,p) reaction. This amount of hydrogen is more than enough to cause extensive damage. Although Auger electron spectroscopy has revealed the presence of nitrogen in the grain boundaries of unirradiated stainless steel, such detection technique has not detected nitrogen in the grain boundaries after irradiation. This apparent absence of nitrogen may be supporting evidence for an (n,p) reaction, or for what is more likely, trapping by radiation defects in the matrix.

Boron is similar to nitrogen, insofar as it also has a strong tendency to segregate in stainless steel and it also has a large thermal neutron cross-section. Instead of undergoing an (n,p) reaction, however, boron undergoes an (n,α) reaction. The α particle (or He atom ) so-produced is an embrittling agent like the proton (or H atom) and can cause extensive damage.

### Broad Statement of the Invention

The present invention relates to a stainless steel steel alloy composition for service where it is exposed to irradiation, but which has resistance to irradiation promoted stress corrosion cracking. The inventive alloy composition should contain as low a nitrogen content as possible in the as-produced material with a maximum of 0.01 wt-% being readily achievable. Substantially all of the nitrogen content should be located in the alloy matrix and not in the grain boundaries. The nitrogen location preferably is achieved by "trapping" nitrogen in the matrix before it has a chance to segregate to the grain boundaries during irradiation. The alloy composition also should contain as low a boron content as possible in the as-produced material with a maximum of 0.003 wt-% being readily achievable. Again, substantially all of the boron content is located in the alloy matrix and not in the grain boundaries. Boron again is "trapped", as is nitrogen, in order to achieve its desired location. The alloy composition further should contain a maximum of 0.01 wt-% carbon in the as-produced material, provided that the strength requirements of the composition still can be met. As recognized in the art, the silicon, phosphorous, and sulfur content combined should be as low as possible. Silicon is restricted to a maximum of 0.02 wt-% while phosphorous and sulfur each are restricted to a maximum content of about 0.002 wt-%. The nickel content of the stainless steel alloy composition ranges between about 9 and 15 wt-% while the chromium content ranges from about 18-20 wt-%. The composition also includes up to about 2 wt % of one or more of the following ingredients for trapping of N in the matrix : Ti, Zr, Hf, Ta, Be, Ce, Y, Nb and mixtures thereof; optionally up to about 0.3 wt % Mo, with the balance being iron.

### Brief Description of the Drawings

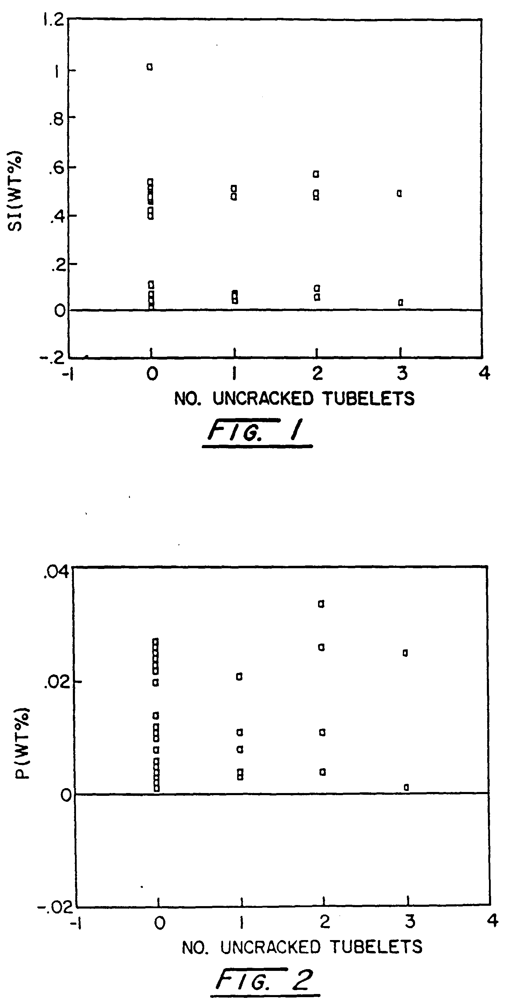

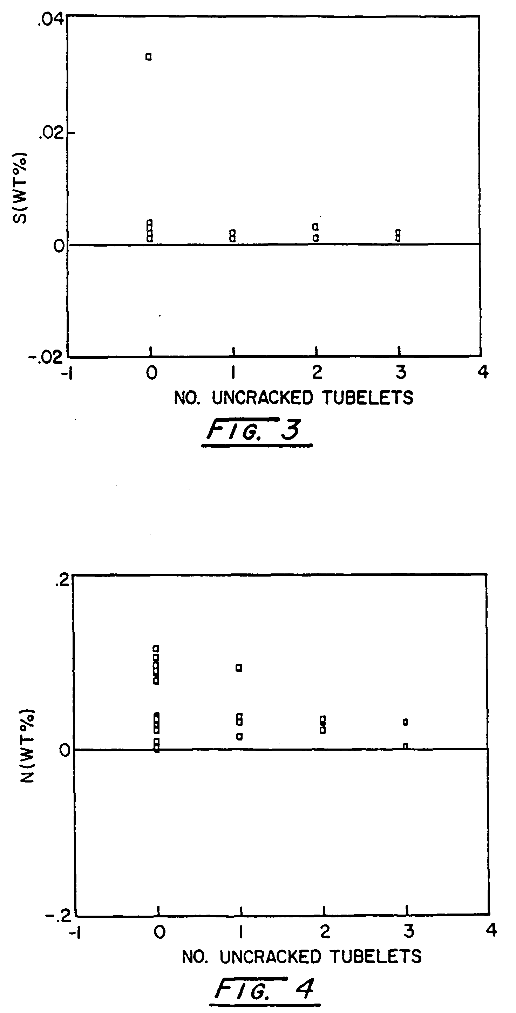

Figs. 1-9 are graphs of cracked and uncracked stainless steel tubelets of varying alloy composition which tubelets were subjected to irradiation at a nuclear facility, as a function of various metals contained therein. These drawings will be described in detail below.

### Detailed Description of the Invention

The stainless steels to which the present invention are addressed are austenitic stainless steels which are favored for their resistance to stress corrosion cracking. To maintain the stainless steel in an austenitic state as well as the strength of this steel, some carbon must be included as an alloying component in view of its known ability to inhibit conversion of the austenitic structure to the martensitic structure. The proportion of carbon, however, is severely restricted in order to suppress IASCC. The chromium-nickel austenitic stainless steels of the present invention comprise Type 304 and related high chromium-nickel alloys, such as listed in *Metals Handbook*, Ninth Edition, Volume 3, page 5, American Society for Metals, Metals Park, Ohio (1980). These alloys comprise austenitic stainless steels of about 18-20 wt-% chromium and about 9-15 wt-% nickel. The bulk of the alloy composition is iron in traditional fashion.

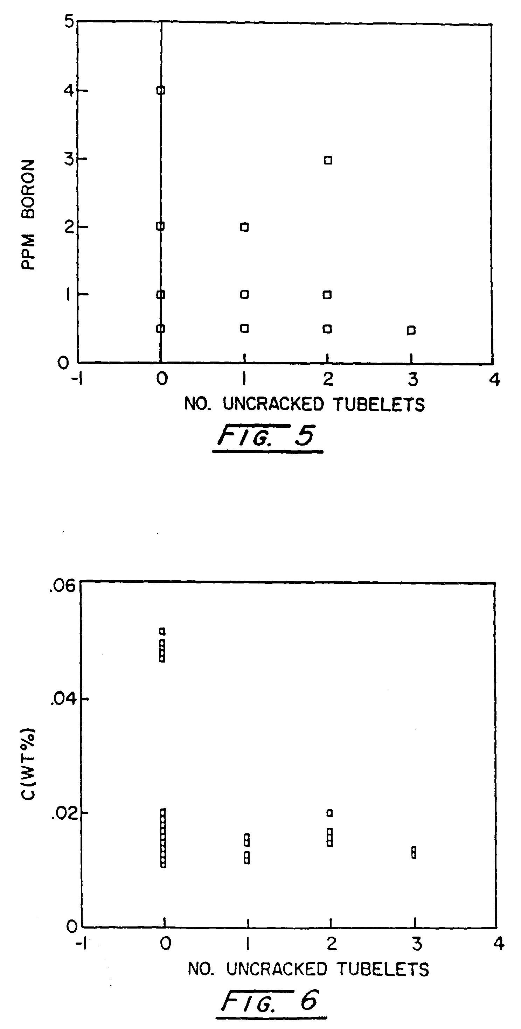

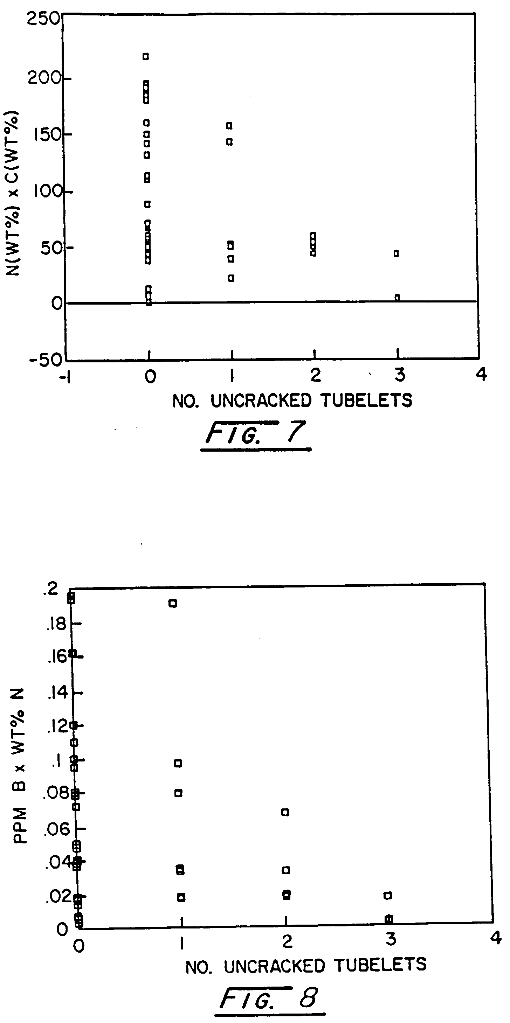

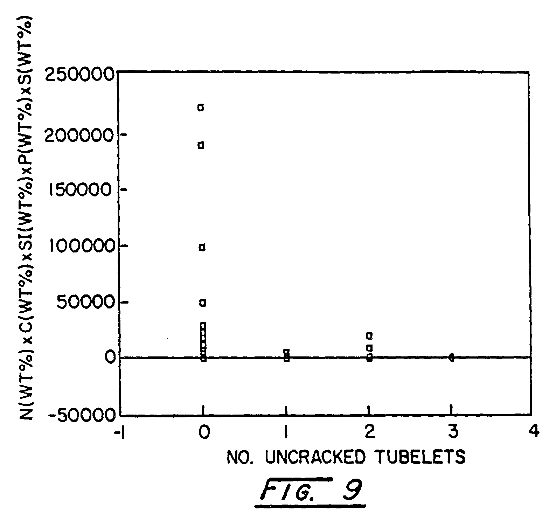

With respect to minor alloying components, the art teaches that silicon, phosphorous, and sulfur should be severely restricted in content. In order to test varying alloy compositions, swelling tubelets were subjected to irradiation at a nuclear facility followed by post-radiation examination. A combination of visual/dye penetrant examination revealed that only 21 of the 198 tubelets tested were uncracked. Five of the alloys each had one uncracked tubelet; five other alloys each had two uncracked tubelets; and two alloys each had three uncracked tubelets. In order to make sense of this data, various plots were made in order to show a correlation between the number of uncracked tubelets and the composition of the stainless steel alloy tested. For example, nitrogen, carbon, boron, silicon, phosphorous, and sulfur contents were plotted separately against the number of uncracked tubelets for each alloy and these results are set forth at Figs. 1-6. Quite unexpected results were determined. The contents of silicon, phosphorous, and sulfur--that is, those elements which are most widely believed to be related to IASCC--showed a very weak or no correlation with IASCC resistance (number of uncracked tubelets)(Figs. 1-3). On the other hand, nitrogen (Fig. 4) and boron (Fig. 5) in particular, showed a much stronger correlation with IASCC resistance. The combination of nitrogen and boron (Fig. 8) also showed a clear trend of increasing crack resistance with decreasing nitrogen and boron contents. Further, carbon (Fig. 6), and especially the combination of nitrogen and carbon (Fig. 7), also showed a much stronger correlation with IASCC resistance than did Si, P or S. Such correlation has been reported previously for nitrogen (U.S. Pat. No. 4,836,976), but not for carbon nor for their combination. Nitrogen and carbon contents were correlated with IASCC resistance even more strongly when silicon, phosphorous, and sulfur contents were taken into account (Fig. 9).

The following table exemplifies preferred austenitic stainless steel alloy compositions in accordance with the precepts of the present invention and which alloys have been selected from the 304, 316, 348, and 321 families of alloys.

**TABLE 1**

| Element | Wt-% | | | |
|---|---|---|---|---|
| | 304 | 316 | 348 | 321 |
| Cr | 18.00-20.00 | 16.00-18.00 | 18.50-20.00 | 17.00-19.00 |
| Ni | 10.00-11.00 | 13.00-14.00 | 10.00-11.00 | 11.00-12.00 |
| Mo | .3 Max | 2.00-3.00 | .3 Max | .3 Max |
| Nb | -- | | .25 Max. | -- |
| Ta | .003 Max | -- | -- | -- |
| Nb+Ta | -- | | 14xC<.65 | -- |
| N | .005 Max. | .005 Max | .005 Max. | .005 Max |
| C | .01 Max. | .01 Max. | .01 Max. | .01 Max. |
| Si | .02 Max. | .02 Max. | .02 Max. | .02 Max. |
| P | .002 Max. | .002 Max. | .002 Max. | .002 Max. |
| S | .002 Max. | .002 Max. | .002 Max. | .002 Max. |
| Fe | Balance | Balance | Balance | Balance |
| Mn | 1.5-2.00 | 1.5-2.00 | 1.5-2.00 | 1.5-2.00 |
| Ce or Y | .1 Ce or .05 Y | .1Ce or .05 Y | .1 Ce or .05 Y | .1 Ce or .05 Y |
| B | <.0003 | <.0003 | <.0003 | <.0003 |
| Ti | -- | | -- | 5xC Min. |

It should be noted that in the foregoing compositions, the high ends of the standard composition ranges for nickel (*Metals Handbook, supra*) have been selected to compensate for the loss of austenite stability resulting from the reduction in nitrogen and carbon contents. Small amounts (about 0.2-0.3 wt-%) of molybdenum preferably have been added to compensate for the loss in strength which also occurs when nitrogen and carbon are lowered, but its presence is only required when certain strength considerations of application of the material are taken into account. The purpose of the cerium and yttrium additions is to trap nitrogen before it can segregate to the grain boundaries.

Pre-irradiation cold work in amounts up to about 8% can be given to the alloys of the preferred composition above the assist the cerium or yttrium additions in trapping nitrogen. These amounts of cold work *per se* are not expected to have any deleterious effects on corrosion or stress corrosion.

With respect to the trapping of nitrogen in the matrix before it has a chance to segregate to the grain boundary during irradiation, strong nitride-forming elements, titanium, zirconium, hafnium, tantalum, beryllium, cerium, yttrium, and niobium, are used in the alloy composition of the present invention. These strong nitride formers are so-called "oversize" elements which migrate away from grain boundaries during irradiation. (Oversize elements increase the mean atomic volume of the alloy). The strong nitride formers mentioned above all are examples of oversize elements. The amount of such strong nitride-forming elements is effective for trapping of N in the matrix, which amount typically ranges up to about 2 wt-% of the alloy composition.

Other means by which nitrogen atoms can be trapped include, for example, radiation defects (*e.g.*, vacancy and interstitial clusters and dislocation loops), dislocations formed by pre-irradiation cold work, interfaces between matrix and precipitates, and twin boundaries. Of these four methods of trapping nitrogen, the metallurgist can exert most control over the dislocation population associated with cold work, by varying the amount of cold work, or over the interface area by varying the size and density of precipitate particles.

Since boron is similar to nitrogen, insofar as it is a strong segregant and can transform to an embrittling gaseous species under the influence of neutron irradiation fields, its content in the steel also should be limited. A limited boron content in the grain boundaries can be achieved by starting out with as low a content as practical in the as-produced material, and by introducing boron traps into the matrix. Strong boride-forming elements (*e.g.*, Y, Ce, Hf, Ti, and Zr) and dislocations can be effective traps. In order to obtain the maximum amount of trapping via nitride and boride formation or at dislocation sites and precipitate surfaces, a homogenizing treatment over the temperature range of about 500° to 800°C for one to several hours may be beneficial as a final processing step. Nitrogen and boron atoms have the opportunity to diffuse throughout the grains during such a heat treatment, maximizing their encounter probability with the traps. Homogenizing at the high end of the temperature range, *i.e.* at 800° C, would minimize the duration of the heat treatment as well as the equilibrium grain boundary concentrations of nitrogen and boron. More uniform mechanical properties may be a desirable side effect of the homogenizing heat treatment.

## Claims

1. An austenitic stainless steel alloy composition for service where it is exposed to irradiation, having resistance to irradiation promoted stress corrosion cracking, consisting essentially of :
(a) a maximum of 0.01 wt-% of N, substantially all of said N being located in the alloy matrix and not in the grain boundaries;
(b) a maximum of 0.003 wt-% B, substantially all of said B being located in the alloy matrix and not in the grain boundaries;
(c) a maximum of 0.01 wt-% of C;
(d) a maximum of 0.02 wt-% Si;
(e) a maximum of 0.002 wt-% P;
(f) a maximum of 0.002 wt-% S;
(g) a Ni content of between about 9 and 15 wt-%;
(h) a Cr content of between about 18 and 20 wt-%;
(i) optionally up to about 0.3 wt-% Mo;
(j) up to about 2 wt-% of one or more of the following ingredients for trapping of N in the matrix : Ti, Zr, Hf, Ta, Be, Ce, Y, Nb and mixtures thereof; and
(k) the balance being Fe.

2. The alloy composition of Claim 1 which contains between about 0.2 and 0.3 wt-% Mo.

3. The alloy composition of Claim 1 or Claim 2 which has been cold worked in an amount of up to about 8%.

4. The alloy composition of any preceding claim which has been heat treated at a temperature of between about 500° and 800°C for a time adequate for assisting in trapping N and B in the matrix.

5. Use of an austenitic stainless steel alloy composition as disclosed in any of the preceding claims for reducing the occurrence of IASSC.

## Patentansprüche

1. Zusammensetzung einer austenitischen, korrosionsbeständigen Stahllegierung zum Einsatz unter Bestrahlung mit Beständigkeit gegen durch Bestrahlung begünstigte Spannungsrißkorrosion, bestehend im wesentlichen aus:
(a) maximal 0,01 Gew.-% N, wobei im wesentlichen das gesamte N in der Legierungsmatrix und nicht in den Korngrenzen angeordnet ist;
(b) maximal 0,003 Gew.-% B, wobei im wesentlichen das gesamte B in der Legierungsmatrix und nicht in den Korngrenzen angeordnet ist;
(c) maximal 0,001 Gew.-% C;
(d) maximal 0,002 Gew.-% Si;
(e) maximal 0,002 Gew.-% P;
(f) maximal 0,002 Gew.-% S;
(g) einem Ni-Gehalt zwischen etwa 9 und 15 Gew.-%;
(h) einem Cr-Gehalt zwischen etwa 18 und 20 Gew.-%;
(i) gegebenenfalls bis zu etwa 0,3 Gew.-% Mo;
(j) bis zu etwa 2 Gew.-% eines oder mehrerer der folgenden Bestandteile, um N in der Matrix festzuhalten: Ti, Zr, Hf, Ta, Be, Ce, Y, Nb und deren Mischungen und
(k) Rest Fe.

2. Legierungszusammensetzung nach Anspruch 1, die zwischen etwa 0,2 und 0,3 Gew.-% Mo enthält.

3. Legierungszusammensetzung nach Anspruch 1 oder 2, die in einem Ausmaß bis zu etwa 8% kalt bearbeitet wurde.

4. Legierungszusammensetzung nach einem vorhergehenden Anspruch, die bei einer Temperatur zwischen 500 und 800°C für eine angemessene Zeit wärmebehandelt wurde, um das Festlegen von N und B in der Matrix zu unterstützen.

5. Verwendung einer Zusammensetzung einer austenitischem, korrosionsbeständigem Stahllegierung, wie in einem der vorhergehenden Ansprüche offenbart, um das Auftreten von durch Bestrahlung unterstützter Spannungsrißkorrosion (IASSC) zu verringern.

## Revendications

1. Alliage d'acier inoxydable austénitique, destiné à servir en un lieu exposé à l'irradiation et présentant de la résistance à la fissuration par corrosion sous tension, favorisée par l'irradiation, constitué essentiellement de :
(a) 0,01 % en poids de N au maximum, pratiquement tout ledit N étant situé dans la matrice d'alliage et non dans les joints de grains,
(b) 0,003 % en poids de B au maximum, pratiquement tout ledit B étant situé dans la matrice d'alliage et non dans les joints de grains,
(c) 0,01 % en poids de C au maximum,
(d) 0,02 % en poids de Si au maximum,
(e) 0,002 % en poids de P au maximum,
(f) 0,002% en poids de S au maximum,
(g) une proportion de Ni comprise entre environ 9 et environ 15% en poids,
(h) une proportion de Cr comprise entre environ 18 et environ 20% en poids,
(i) éventuellement jusqu'à environ 0,3 % en poids de Mo,
(j) jusqu'à environ 2% en poids d'un ou plusieurs des éléments suivants, destinés au piégeage de N dans la matrice : Ti, Zr, Hf, Ta, Be, Ce, Y, Nb et leurs mélanges, et
(k) du Fe constituant le complément.

2. Alliage selon la revendication 1, qui contient une proportion de Mo comprise entre environ 0,2 et environ 0,3 % en poids.

3. Alliage selon la revendication 1 ou 2, qui a été travaillé à froid en une proportion atteignant au plus environ 8%.

4. Alliage selon l'une quelconque des revendications précédentes, que l'on a traité par la chaleur, à une température comprise entre environ 500°C et environ 800°C, pendant un temps suffisant pour faciliter le piégeage de N et B dans la matrice.

5. Utilisation d'un alliage d'acier inoxydable austénitique, tel que défini dans l'une quelconque des revendications précédentes, pour la réduction de l'apparition de la fissuration par corrosion sous tension, facilitée par l'irradiation.
